# EUROPEAN PATENT APPLICATION

(11) **EP 3 789 276 A1**
(43) Date of publication of application: **10.03.2021**
(21) Application number: 19207875.6
(22) Date of filing: 08.11.2019
(51) Int. Cl.: B62D 37/02, B62D 35/00

(54) **MOVABLY OPENED ACTIVE SPOILER ASSEMBLY**

(30) Priority: 09.09.2019 CN 201921490853 U; 09.09.2019 CN 201910849262
(71) Applicant: Yanfeng Plastic Omnium Automotive Exterior Systems Co., Ltd., Shanghai 201805 (CN); Compagnie Plastic Omnium, 69007 Lyon (FR)
(72) Inventor: LIU, Xiaoshan, SHANGHAI, 201805 (CN); LIN, Miaotian, SHANGHAI, 201805 (CN)
(74) Representative: LLR

(57) **Abstract**

The present invention provides a movably opened active spoiler assembly. The active spoiler assembly is assembled at the rear of a vehicle and includes: a spoiler body fixed relative to a vehicle body, wherein an accommodation space is formed inside the spoiler body, and an opening is formed at the rear of the spoiler body; an electrical motor fixed on the vehicle body, a motor spindle driven by the motor, and a connecting rod mechanism driven by the motor spindle; a first fixed support and a second fixed support fixed inside the spoiler body; and a movable spoiler connected respectively to the first fixed support and the second fixed support via the connecting rod mechanism, wherein the movable spoiler performs translational movement along the longitudinal direction of the vehicle body under an action of the connecting rod mechanism, and the movable spoiler extends out and retracts back through the opening at the rear of the spoiler body. According to the present invention, the movably opened active spoiler assembly can adapt to a vehicle speed change, reduce air drag of the entire vehicle, and increase aerodynamic downforce of the vehicle.

## Description

### FIELD OF THE INVENTION

The present invention relates to the field of active spoilers, and specifically, to a movably opened active spoiler assembly.

### BACKGROUND OF THE INVENTION

An active spoiler is an auxiliary device that is added to adapt to the impact of aerodynamic down force and lift force due to a change of a vehicle speed in a running process for the purpose of safe driving performance of the vehicle.

Currently, to reduce wind resistance (air drag) of the entire vehicle and improve the battery endurance mileage, a battery capacity is usually increased and a fixed and unchangeable spoiler is used to increase aerodynamic downforce when a vehicle runs at a high speed. Therefore, how to adapt to a change of a vehicle speed with low cost and high efficiency, and how to reduce wind resistance and improve vehicle aerodynamic downforce by opening an active spoiler is an urgent problem to be resolved.

### SUMMARY OF THE INVENTION

An objective of the present invention is to provide an active spoiler assembly that can be movably opened, so as to resolve the problems of the prior art for lack of an active spoiler device that can adapt to a change of a vehicle speed so as to reduce wind resistance of the entire vehicle and increase aerodynamic downforce of the vehicle.

To resolve the foregoing technical problems, the present invention provides the following technical solution:
An active spoiler assembly is provided. The active spoiler assembly is assembled at the rear of a vehicle and includes: a spoiler body fixed relative to a vehicle body, wherein an accommodation space is formed inside the spoiler body, and an opening is formed at the rear of the spoiler body; an electrical motor fixed on the vehicle body, a motor spindle driven by the electrical motor, and a connecting rod mechanism being connected with and driven by the motor spindle; and a movable spoiler being connected with the connecting rod mechanism, wherein the movable spoiler performs translational movement along the longitudinal direction of the vehicle body under an action of the connecting rod mechanism, and the movable spoiler extends out and retracts back through the opening at the rear of the spoiler body such that the active spoiler assembly can be movably opened.

Preferably, the active spoiler assembly further comprises a first fixed support fixed inside the spoiler body and the connecting rod mechanism includes a first connecting rod and a second connecting rod connecting the movable spoiler with the first fixed support.

Preferably, an end of the first connecting rod is connected to the first fixed support by means of the motor spindle, and the other end of the first connecting rod is connected to the second connecting rod by means of a first rotating shaft.

Preferably, the active spoiler assembly further comprises a second fixed support fixed inside the spoiler body and the connecting rod mechanism further includes a third connecting rod and a fourth connecting rod connecting the movable spoiler with the second fixed support, the third connecting rod is connected to the second connecting rod by means of a second rotating shaft, the other end of the second rotating shaft is fastened to the movable spoiler, and the fourth connecting rod is connected to the second fixed support by means of a third rotating shaft.

Preferably, the third connecting rod is connected with the fourth connecting rod by an overlap joint by means of a sliding axle fixed on the third connecting rod, and the fourth connecting rod is provided with a waist shape slot configured such that the sliding axle can slide therein.

Preferably, the part of the movable spoiler that extends out and retracts back through the opening at the rear of the spoiler body has a flare-shaped structure or a tubular-shaped structure.

Preferably, the spoiler body is provided with a streamlined external contour.

Preferably, the upper and lower sides of the movable spoiler are respectively pressed tight by pressure plates, to prevent the movable spoiler from shifting in a vertical direction.

Preferably, the pressure plates are fastened inside the spoiler body by welding or a connection element.

Preferably, two active spoiler assemblies share the same electrical motor.

According to the movably opened active spoiler assembly provided by the present invention, the active spoiler assembly can adapt to a vehicle speed change, effectively reduce the safe driving risk caused by an excessively high speed and thus an excessively large lifting force of the vehicle, and reduce energy loss to improve battery life, to realize high speed safe driving and green environmental protection, energy saving and emission reduction functions.

In conclusion, the present invention provides a movably opened active spoiler assembly that can adapt to a vehicle speed change, reduce air drag of the entire vehicle, and increase aerodynamic downforce of the vehicle.

### BRIEF DESCRIPTION OF THE DRAWINGS

FIG. 1 is an external structure view of a movably opened active spoiler assembly assembled at the rear of a vehicle according to a preferred embodiment of the present invention;
FIG. 2 is a sectional view along a cross-section line A-A in FIG. 1;
FIG. 3 is a schematic diagram of the entire spoiler assembly at the rear of the vehicle;
FIG. 4 is an enlarged schematic diagram of the spoiler assembly.

### DETAILED DESCRIPTION OF THE EMBODIMENTS

The present invention is further described below with reference to specific embodiments. It should be understood that, the following embodiments are merely used to describe the present invention, but are not intended to limit the scope of the present invention.

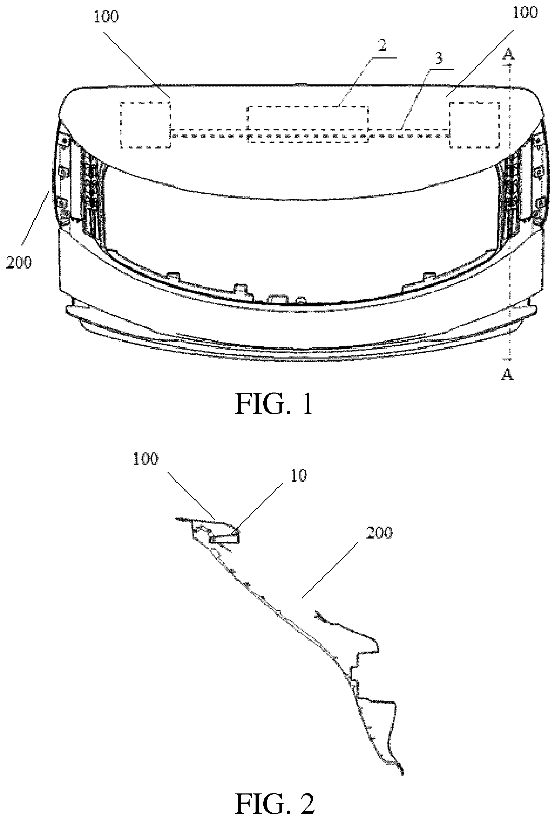

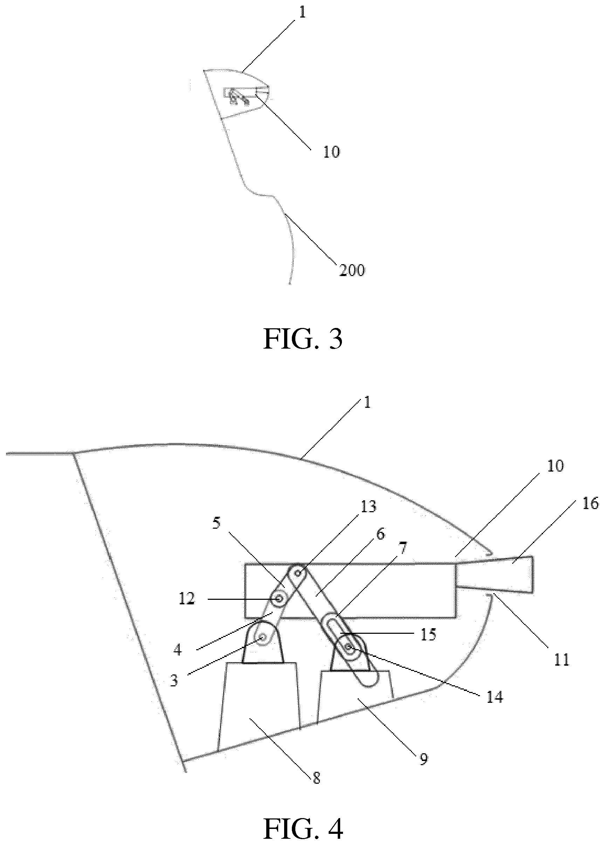

FIG. 1 and FIG. 2 are schematic status diagrams of a movably opened active spoiler assembly 100 assembled at the rear of a vehicle 200 according to a preferred embodiment of the present invention. The vehicle 200 is provided with two active spoiler assemblies 100, which share a same electrical motor 2 and a same motor spindle 3. A movable spoiler 10 of the active spoiler assembly 100 performs outspread and retracting motions at the rear of the vehicle 200 when the vehicle 200 is running, to adapt to air downforce caused by a vehicle speed change in the running process. This embodiment can effectively reduce, by providing such an active spoiler assembly 100, the safe driving risk caused by an excessively high speed and thus an excessively large lifting force of the vehicle 200, and reduce energy loss to improve battery life, to implement high speed safe driving and green environmental protection, energy saving and emission reduction functions. Specific structures and working principles thereof are described in detail as follows:
With reference to FIG. 3 and FIG. 4, the active spoiler assembly 100 includes: a spoiler body 1, the electrical motor 2, the motor spindle 3, a connecting rod mechanism including a first connecting rod 4, a second connecting rod 5, a third connecting rod 6, and a fourth connecting rod 7, a first fixed support 8, a second fixed support 9, and the movable spoiler 10.

The spoiler body 1 is fixed relative to a vehicle body. An accommodation space is formed inside the spoiler body 1 for mounting other components. An opening 11 is formed at the rear of the spoiler body 1 to enable the movable spoiler 10 to perform outspread and retracting motions through the opening. The electrical motor 2 is fixed on the vehicle body (as shown in FIG. 1), and is driven connected to the motor spindle 3. The motor spindle 3 is further connected to the connecting rod mechanism to drive the connecting rod mechanism to move. The first fixed support 8 and the second fixed support 9 are respectively fixed inside the spoiler body 1. The movable spoiler 10 is respectively connected to the first fixed support 8 and the second fixed support 9 via the connecting rod mechanism. In this way, the movable spoiler 10 can perform translational movement along the longitudinal direction of the vehicle body under an action of the connecting rod mechanism, and stretches out and retracts from the opening 11 at the rear of the spoiler body 1, to adapt to air downforce caused by a vehicle speed change in a running process, thereby performing an active spoiler function.

According to the preferred embodiment, the movable spoiler 10 is connected to the first fixed support 8 via the first connecting rod 4 and the second connecting rod 5. An end of the first connecting rod 4 is connected to the first fixed support 8 via the motor spindle 3, the other end is connected to the second connecting rod 5 by using a first rotating shaft 12.

According to the preferred embodiment, the movable spoiler 10 is connected to the second fixed support 9 via the third connecting rod 6 and the fourth connecting rod 7. An end of the third connecting rod 6 is connected to the second connecting rod 5 by using a second rotating shaft 13. The other end of the second rotating shaft 13 is fastened to the movable spoiler 10. The fourth connecting rod 7 is connected to the second fixed support 9 by using a third rotating shaft (not shown in the figures).

According to the preferred embodiment, the third connecting rod 6 is connected with the fourth connecting rod 7 by an overlap joint by means of a sliding axle 14 fixed on the third connecting rod 6. The fourth connecting rod 7 is further provided with a waist shape slot 15 configured such that the sliding axle 14 can slide therein.

According to the preferred embodiment, the part of the movable spoiler 10 that extends out and retracts back from the opening 11 at the rear of the spoiler body 1 has a flare-shaped structure 16. In a vehicle moving process, the external contour of the flare-shaped structure 16 can effectively increase the aerodynamic downforce of the vehicle in a high-speed running status. It should be understood that, the extending part of the movable spoiler 10 may alternatively be any proper shaped structure designed according to the rear shape of the vehicle, for example, a tubular-shaped structure, and is not limited to a flare shape.

According to the preferred embodiment, the spoiler body has a streamlined external contour, to reduce wind resistance to the most extent, thereby increasing the battery endurance mileage.

According to the preferred embodiment, the upper and lower sides of the movable spoiler 10 are respectively pressed tight by pressure plates, to prevent the movable spoiler 10 from shifting in a vertical direction. The pressure plates may be fastened inside the spoiler body 1 by welding or a connection element.

The working principles of the active spoiler assembly 100 according to the foregoing preferred embodiment are as follows:
In a vehicle running process, after a vehicle speed sensor or a pressure sensor sends a signal to a vehicle computer, the vehicle computer outputs the signal to activate the electrical motor 2 to rotate. The motor 2 drives the motor spindle 3 to rotate, and then drives the first connecting rod 4 to rotate. The second connecting rod 5 correspondingly rotates, and then drives the active spoiler 10 to slide along the horizontal direction. In this process, through cooperation between the sliding axle 14 and the waist shape slot 15, the third connecting rod 6 and the fourth connecting rod 7 move with the motion of the active spoiler 10. By changing a rotation direction of the motor spindle 3, switching between the extending motion and the retracting motion of the active spoiler 10 from the opening of the spoiler body 1 can be realized. When the vehicle runs at a high speed, by extending the active spoiler 10 out, air turbulence at the rear of the vehicle distinctly changes, which reduces the air drag of the entire vehicle and increases aerodynamic downforce of the vehicle. When the speed of the vehicle decreases, the active spoiler 10 is retracted back into the spoiler body 1 without any influence on the airflow at the rear of the vehicle.

The foregoing descriptions are merely preferred embodiments of the present invention, but are not intended to limit the scope of the present invention. Various changes may be further made to the foregoing embodiments of the present invention. Any simple, equivalent change and modification made according to the claims of this application and the content of the specification of the present invention shall fall within the protection scope of the claims of the present invention. The content that is not described in detail in the present invention is content of a conventional technology.

## Claims

1. An active spoiler assembly, assembled at the rear of a vehicle, **characterized in that** it comprises:
- a spoiler body (1) fixed relative to a vehicle body, wherein an accommodation space is formed inside the spoiler body (1) and an opening (11) is formed at the rear of the spoiler body (1);
- an electrical motor (2) fixed on the vehicle body and a motor spindle (3) driven by the electrical motor (2),
- a connecting rod mechanism being connected with and driven by the motor spindle (3); and
- a movable spoiler (10) being connected with the connecting rod mechanism,
wherein the movable spoiler (10) performs translational movement along the longitudinal direction of the vehicle body under an action of the connecting rod mechanism, and the movable spoiler (10) extends out and retracts back through the opening (11) at the rear of the spoiler body (1) such that the active spoiler assembly can be movably opened.

2. The active spoiler assembly according to claim 1, wherein it further comprises a first fixed support (8) fixed inside the spoiler body (1), and the connecting rod mechanism comprises a first connecting rod (4) and a second connecting rod (5) connecting the movable spoiler (10) with the first fixed support (8).

3. The active spoiler assembly according to claim 2, wherein an end of the first connecting rod (4) is connected to the first fixed support (8) by means of the motor spindle (3), and the other end of the first connecting rod (4) is connected to the second connecting rod (5) by means of a first rotating shaft (12).

4. The active spoiler assembly according to claim 3, wherein it further comprises a second fixed support (9) fixed inside the spoiler body (1) and the connecting rod mechanism further comprises a third connecting rod (6) and a fourth connecting rod (7) connecting the movable spoiler (10) with the second fixed support (9), the third connecting rod (6) being connected to the second connecting rod (5) by means of a second rotating shaft (13), the other end of the second rotating shaft (13) being fastened to the movable spoiler (10), and the fourth connecting rod (7) being connected to the second fixed support (9) by means of a third rotating shaft.

5. The active spoiler assembly according to claim 4, wherein the third connecting rod (6) is connected with the fourth connecting rod (7) by an overlap joint by means of a sliding axle (14) fixed on the third connecting rod (6), and the fourth connecting rod (7) being provided with a waist shape slot (15) configured such that the sliding axle (14) can slide therein.

6. The active spoiler assembly according to any one of the previous claims, wherein the part of the movable spoiler (10) that extends out and retracts back through the opening (11) at the rear of the spoiler body (1) has a flare-shaped structure (16) or a tubular-shaped structure.

7. The active spoiler assembly according to any one of the previous claims, wherein the spoiler body (1) is provided with a streamlined external contour.

8. The active spoiler assembly according to any one of the previous claims, wherein the upper and lower sides of the movable spoiler (10) are respectively pressed tight by pressure plates, to prevent the movable spoiler (10) from shifting in a vertical direction.

9. The active spoiler assembly according to claim 8, wherein the pressure plates are fastened inside the spoiler body (1) by welding or a connection element.

10. The active spoiler assembly according to any one of the previous claims, wherein two active spoiler assemblies share the same electrical motor (2).
